# EUROPEAN PATENT APPLICATION

(11) **EP 2 136 139 A1**
(43) Date of publication of application: **23.12.2009**
(21) Application number: 08172551.7
(22) Date of filing: 22.12.2008
(51) Int. Cl.: F23M 5/02

(54) **Apparatus for sealing a burner assembly in an oxy-combustion Boiler**

(71) Applicant: L'Air Liquide Société Anonyme pour l'Etude et l'Exploitation des Procédés Georges Claude, 75007 Paris (FR)
(72) Inventor: Sanchez-Molinero, Ivan, 78000 Versailles (FR); Laurent, Jacky, 78210 Saint-Cyr l'Ecole (FR); Mulon, Jacques, 91300 Massy (FR); Paubel, Xavier, 92290 Chateney Malabry (FR); Recourt, Patrick, 91460 Marcoussis (FR); Tsiava, Rémi-Pierre, 91250 Saint Germain-Les-Corbeil (FR)
(74) Representative: Mercey, Fiona Susan

(57) **Abstract**

The invention relates to an apparatus for sealing a burner assembly (301) in an oxycombustion boiler. The burner assembly seal (300) comprises a quarl block (302) and a burner assembly (301), wherein the burner assembly (301) is disposed within the quarl block (302). It comprises a first sealing element (305) for sealing the burner assembly (301) against the quarl block (302), wherein the quarl block (302) has an internal step (303) to accomodiate the first sealing element (305). The improvement further comprises a second sealing element (304) external to the quarl block (302), contiguous with the first sealing element (305). The improvement further comprises a first compression clamp (306) contiguous with the second sealing element (304), providing compression to the second sealing element (304), which provides a gland packing effect on the first sealing element (305), thereby sealing the burner assembly (301) against the quarl block (302).
The quarl block (302) further comprises an external step (311), contiguous to which third (308) and fourth (309) sealing elements and a second compression clamp (310) are placed.

## Description

The present invention relates to a method and apparatus for sealing a burner assembly in an oxi-combustion boiler.

With the ever stricter environmental constraints, in particular in terms of CO₂ and NOx production, the all-oxygen combustion solution (oxi-combustion) becomes attractive in processes in which the thermal energy comes from the combustion of fossil fuels. Conventional air/fuel plants do not always have the proper geometry nor the proper materials to operate with oxygen. This is because the absence of nitrogen ballast in oxi-combustion significantly alters the heat transfer modes, the concentrations of combustion product species and the pressure regimes within the combustion chamber and the subsequent heat transfer areas.

To be able to operate in oxi-combustion mode in plants that had been originally designed to operate in air/fuel mode, it is often useful to reinject flue gas into the combustion chamber so as to (at least partly) compensate for the absence of nitrogen as ballast. However, the reinjected flue gas often eliminates many of the benefits of oxi-combustion, such as the reduction in level of unburnt species of heavy petroleum residues or some of the ash, which are sources of complications in the downstream flue gas treatment process.

It is known that it is important to keep a combustion chamber as airtight as possible, to prevent any ingress of air that would dilute the flue gases and will in the end have to be separated, making the flue gas post-treatment more expensive. The pressure of the combustion chamber in which the burners will be fitted is typically slightly positive and it is necessary to avoid any combustion gas outflow (as a safety function) and to prevent any ingress of air into the combustion chamber and prevent dilution of the flue gases (as a process function).

Usually, in plants in which the safety function is predominant, it is possible to work at an underpressure relative to the outside, therefore allowing air ingress. On the other hand, in plants in which the process function is predominant, it is usual to work an overpressure, which is often associated with possible leaks, in particular after a long operating time.

The present invention is characterized by the use of various means that ensure sealing between the burner and the associated quarl and between this quarl and the walls of the boiler.

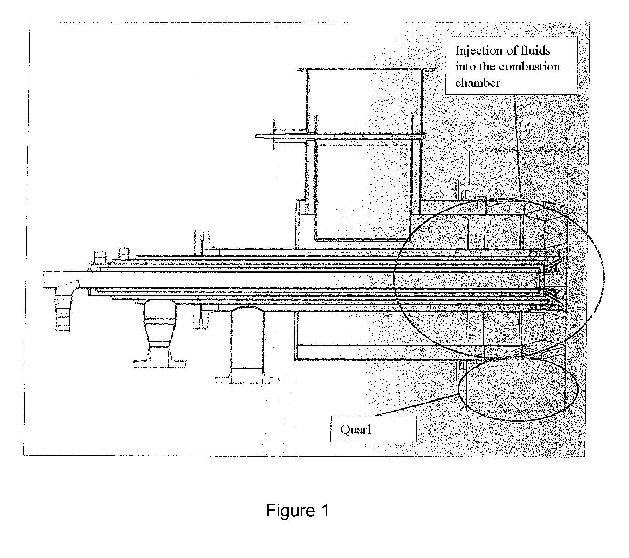

A typical oxi-combustion burner is shown in Figure 1, in which the fluids are injected (on the right) by means of metal injectors incorporated into a metal burner body. The metal body of the burner is surrounded by a quarl, which incorporates the ports of the burners into the walls of the furnace. This quarl is typically constructed from refractory material, which are able to withstand the typical contents of pollutants (i.e. sulphur oxides, nitrogen oxides, heavy metals, chlorine, water, H₂S, CO, etc.) and high temperatures. This refractory quarl block is inserted into the wall of the boiler.

In the base configuration, the wall of the boiler is typically also made of refractory, covered with steel tubes within which pressurized water vapourizes at Tₛₐₜ and Pₛₐₜ (typical boiler process). The quarl fits into this refractory wall and presses upwards.

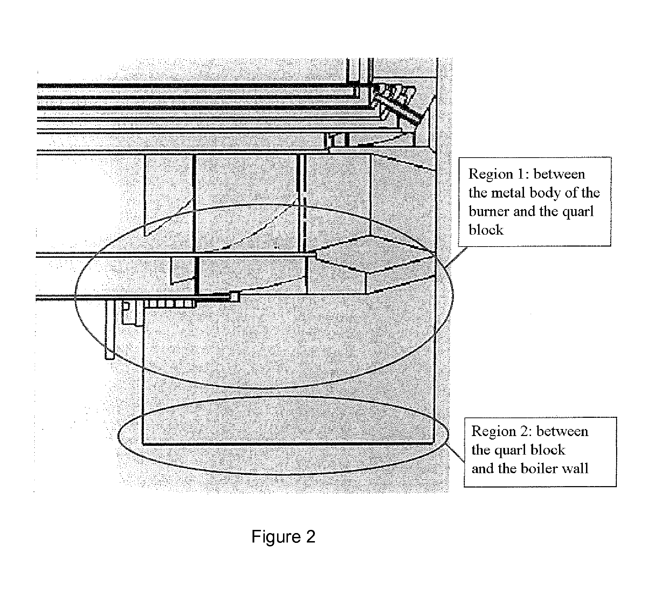

In this burner insertion, there are two regions that have to be sealed, these being indicated the Figure 2:
1) Region 1, a region between the metal body of the burner and a refractory quarl block;
2) Region 2, a region between the refractory quarl block and the wall of the boiler, which itself is made of refractory.

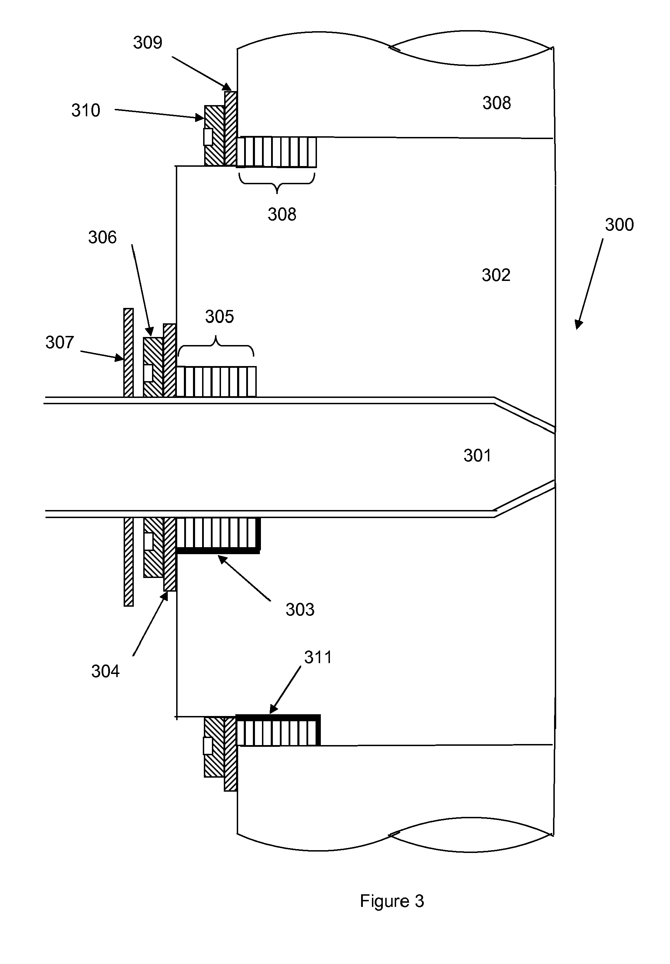

Turning now to Figure 3, burner assembly seal 300 comprises burner assembly 301, quarl block 302, and furnace wall 308. Burner assembly 301 is disposed within quarl block 302. Quarl block 302 is disposed within furnace wall 308. Quarl block 302 has internal step 303 machined into the edge. First sealing element 305 is inserted into the space created by internal step 303, and is contiguous with both burner assembly 301 and quarl block 302. Second sealing element 304 is external to quarl block 302, but contiguous with both burner assembly 301 and first sealing element 305. First compression clamp 306 is contiguous with second sealing element 304 and provides sufficient compression to allow second sealing element 304 to press on first sealing element 305, thereby providing gland packing between burner element 301 and quarl block 302.

First sealing element 305 may be any appropriate sealing material known to the skilled artisan, and should be resistant to temperatures up to approximately 300°C. The first sealing element my be, but is not limited to, a felt seal. First compression clamp 306 may be a circular clamp that is fastioned to the burner assembly. Additional boiler support element 307 may be provided, and fastened to the burner. Additional boiler support element 307 may be a circular clamp, possibly the same claimp as used in the first compression clamp, andmay be fixed to the boiler by bolts.

Quarl block 302 has external step 311 machined into the edge. Third sealing element 308 is inserted into the space created by external step 311, and is contiguous with both quarl block 302 and furnace wall 308. Fourth sealing element 309 is external to, but contiguous with, quarl block 302. Second compression clamp 310 is contiguous with fourth sealing element 309 and provides sufficient compression to allow fourth sealing element 309 to press on third sealing element 308, thereby providing gland packing between quarl block 302 and furnace wall 308.

Third sealing element 308 may be any appropriate sealing material known to the skilled artisan, and should be resistant to temperatures up to approximately 300°C. The third sealing element my be, but is not limited to, a felt seal. Second compression clamp 310 may be a jubilee clip.

Quarl block 302 may be sealed against furnace wall 308 by the application, along the entire interface, of appropriate refractory cement with techniques known by one of ordinary skill in the art.

Other features and advantages of the invention will appear from a reading of the description that follows. Embodiments of the invention are provided as non-limiting examples.
Figure 1 represents an oxycombustion burner.
Figure 2 indicates the two regions that require sealing.
Figure 3 is a schematic representation one embodiment of the present invention.

## Claims

1. A burner assembly seal comprising:
• quarl block,
• a burner assembly, wherein the burner assembly is disposed within the quarl block, the improvement comprising;
• a first sealing element for sealing the burner assembly against the quarl block, wherein the quarl block has an internal step to accomodiate the first sealing element,
• a second sealing element external to the quarl block, continguous with the first sealing element,
• a first compression clamp contiguous with the second sealing element, providing compression to the second sealing element, which provides a gland packing effect on the first sealing element, thereby sealing the burner assembly against the quarl block.

2. The burner assembly seal of claim 1, wherein the first sealing element comprises felt.

3. The burner assembly seal of claims 1 and 2, wherein the first sealing element is resistant to temperatures up to 300°C.

4. The burner assembly seal of any of the above claims, wherein the first compression clamp comprises a circular clamp fastened to the burner assembly.

5. The burner assembly seal of any of the above claims, further comprising an additional boiler support element.

6. The burner assembly seal of any of the above claims, further comprising:
• a furnace wall, wherein the quarl block is disposed within the furnace wall,
• a third sealing element for sealing the quarl block against the furnace wall, wherein the quarl block has an external step to accomodiate the third sealing element,
• a fourth sealing element external to the quarl block, continguous with the third sealing element.,
• a second compression clamp contiguous with the fourth sealing element, providing compression to the fourth sealing element, which provides a gland packing effect on the third sealing element, thereby sealing the quarl block against the furnace wall.

7. The burner assembly seal of claim 6, wherein the third sealing element comprises felt.

8. The burner assembly seal of claims 6 and 7, wherein the third sealing element is resistant to temperatures up to 300°C.

9. The burner assembly seal of claims 6 - 8, wherein the second compression clamp comprises a jubilee clip.
